# EUROPEAN PATENT SPECIFICATION

(11) **EP 2 993 278 B1**
(45) Date of publication and mention of the grant of the patent: **14.12.2016**
(21) Application number: 15183153.4
(22) Date of filing: 31.08.2015
(51) Int. Cl.: E04B 1/94, B32B 5/26, B32B 17/02, B32B 19/06, A62C 2/10

(54) **COMPOSITE FIRE RATED SHUTTER**
ZUSAMMENGESETZTES FEUERSICHERES TRENNELEMENT
OBTURATEUR COMPOSITE RÉSISTANT AU FEU

(30) Priority: 02.09.2014 HK 14108886
(43) Date of publication of application: 09.03.2016
(73) Proprietor: Intumescent Systems (Greater China) Limited, Kowloon, Hong Kong (HK)
(72) Inventor: LEUNG, Kam Tak, Kowloon, Hong Kong (HK)
(74) Representative: Becker Kurig Straus

(56) References cited:
- CN-U- 202 106 600
- US-A- 6 114 003
- US-A1- 2005 031 843
- US-A1- 2007 224 401
- US-A1- 2009 140 097

## Description

### BACKGROUND

### Technical Field

The present patent application relates to a fire protection installation, and particularly to a composite fire rated shutter formed by composition of multiple layers of fire resistant material.

### Related Art

A fire rated shutter or smoke proof screen can form a fixed or an active barrier to block smoke or fire from spreading, which can be operated manually or automatically. It is usually installed to commercial properties, such as shopping malls and airports terminals. The fire rated shutter is used for fireproofing and heat insulation at larger openings of buildings. The fire rated shutter is installed at the fire separation areas in the buildings and can effectively stop the fire from spreading to ensure the safety of lives and properties. Therefore, the fire rated shutter which is an active fire barrier is an indispensable fire protection measure in modern buildings. Traditional fire rated shutters are mostly inorganic fiber materials, for example, ceramic fiber cloth or asbestos cloth or the like is used as a shutter face, and a steel material may also be used as a shutter face. Although they can meet the requirements of fire protection, the cost of the materials is comparatively high. It renders the cost of the traditional fire rated shutters increasing accordingly, which is not conducive to large-scale popularization and application.

### SUMMARY

A technical problem to be solved by the present patent application is to provide a thinner and lightweight composite fire rated shutter with good fire protection effects, so as to solve the technical problem in the prior art that the fire rated shutter has a greater weight, a greater thickness and poor fire protection effects.

A technical solution adopted to solve the technical problem of the present patent application is as follows:
A composite fire rated shutter, including two sides in symmetry, wherein one of the two sides sequentially includes a layer of material A or material E, a first layer of material B, a first layer of material C, a second layer of material B, a second layer of material C, a third layer of material B and a layer of material D from outside to inside, and in the middle of the two sides is an air interlayer; wherein the material A or the material E is a stainless steel wire reinforced fiberglass fabric; the material B is a ceramic blanket; the material C is a stainless steel wire reinforced fiberglass fabric; the material D is a foil-laminated fiberglass fabric layer; a thickness of the material A is 0.54 mm; a thickness of the material B is 3 mm; a thickness of the material C is 1.5 mm; a thickness of the material D is 0.3 mm; a thickness of the material E is 0.95 mm; the material A includes a substrate and a coating coated on the substrate, the coating of the material A includes fire retardant polyurethane with added aluminium pigment; the material E includes a substrate and a coating coated on the substrate, and the coating of the material E includes fire retardant silicone with added optional colour pigment.

Another technical solution adopted to solve the technical problem of the present patent application is as follows:
A composite fire rated shutter, including two sides in symmetry, wherein one of the two sides includes at least one layer of material A, material E or material D, at least one layer of material B, at least one layer of material C and in the middle of the two sides is an air interlayer; wherein the material B is a ceramic blanket; the material C is a stainless steel wire reinforced fiberglass fabric; the material D is a foil-laminated fiberglass fabric layer and the material A or the material E is a stainless steel wire reinforced fiberglass fabric.

A thickness of the material B may be 3 mm; a thickness of the material C may be 1.5 mm; a thickness of the material D may be 0.3 mm; a thickness of the material A may be 0.54 mm; and a thickness of the material E may be 0.95 mm.

The layer of the material A, the material E or the material D may be disposed at an outermost side of the composite fire rated shutter.

At least one of the material A and the material E may include a substrate and a coating coated on the substrate. The coating of the material A may include fire retardant polyurethane with added aluminium pigment. The coating of the material E may include fire retardant silicone with added optional colour pigment.

The material C may include a substrate and a coating coated on the substrate. The coating of the material C may include silicon and expanded graphite.

Density of the material B may be 200 kg/m³.

Thermal conductivity of the material B may be 0.055-0.065 W/m K at 200°C; 0.110-0.120 W/m K at 400°C; and 0.160-0.170 W/m K at 600°C.

Preferably, the at least one layer of the material B includes a first layer of the material B, a second layer of the material B and a third layer of the material B; the at least one layer of the material C includes a first layer of the material C and a second layer of the material C; and the one of the two sides sequentially includes the layer of the material A or the material E, the first layer of the material B, the first layer of the material C, the second layer of the material B, the second layer of the material C, the third layer of the material B and the layer of the material D from outside to inside.

Preferably, the at least one layer of the material B includes a first layer of the material B and a second layer of the material B; the at least one layer of the material C includes a first layer of the material C and a second layer of the material C; and the one of the two sides sequentially includes the layer of the material A or the material E, the first layer of the material C, the first layer of the material B, the second layer of the material B, the second layer of the material C and the layer of material D from outside to inside.

Preferably, the at least one layer of the material B includes a first layer of the material B, a second layer of the material B and a third layer of the material B; and the one of the two sides sequentially includes the layer of the material A or the material E, the first layer of the material B, the second layer of the material B, the layer of the material C, the third layer of the material B and the layer of the material D from outside to inside.

Preferably, the at least one layer of the material B includes a first layer of the material B and a second layer of the material B; the at least one layer of the material D includes a first layer of the material D and a second layer of the material D; and the one of the two sides sequentially includes the first layer of the material D, the first layer of the material B, the layer of the material C, the second layer of the material B and the second layer of the material D from outside to inside.

Preferably, the at least one layer of the material B includes a first layer of the material B and a second layer of the material B; the at least one layer of the material A or the material E includes a first layer of the material A or the material E and a second layer of the material A or the material E; and the one of the two sides sequentially includes the first layer of the material A or the material E, the first layer of the material B, the second layer of the material B, the layer of the material C and the second layer of the material A or the material E from outside to inside.

Compared with the prior art, the present patent application can effectively solve problems, like the ceramic fiber blanket which is liable to crack, break, fall off and swell in processes such as manufacturing, transporting, installing, rolling or folding and compressing the shutter face. Upon replacement of ceramic fiber cloth, the effect of the heat insulating function is greatly enhanced, and the cost is significantly reduced on the whole.

### BRIEF DESCRIPTION OF THE DRAWINGS

The present patent application is further described below with reference to the accompanying drawings and embodiments, and wherein:
FIG. 1 is a schematic cross-sectional view of the first implementation of a composite fire rated shutter according to the present patent application;
FIG. 2 is a schematic cross-sectional view of the second implementation of a composite fire rated shutter according to the present patent application;
FIG. 3 is a schematic cross-sectional view of the third implementation of a composite fire rated shutter according to the present patent application;
FIG. 4 is a schematic cross-sectional view of the fourth implementation of a composite fire rated shutter according to the present patent application; and
FIG. 5 is a schematic cross-sectional view of the fifth implementation of a composite fire rated shutter according to the present patent application.

### DETAILED DESCRIPTION

In order to make the objective, technical solutions and advantages of the present patent application more comprehensible, the present patent application is further described below in detail with reference to the accompanying drawings and embodiments. It should be understood that specific embodiments described herein are merely used to explain the present patent application, but not used to limit the present patent application.

To prevent fire from spreading in open floor areas of commercial/industrial buildings, larger floor areas are separated by fire rated shutters to provide specific integrity and heat insulation requirements. In many cases, the fire rated shutters must provide integrity and heat insulation with specified fire rated values under a standard fire heating curve. Such severe fire protection requirements can be achieved by using two pieces of slim innovative flexible composite fire rated blankets with an air gap in between.

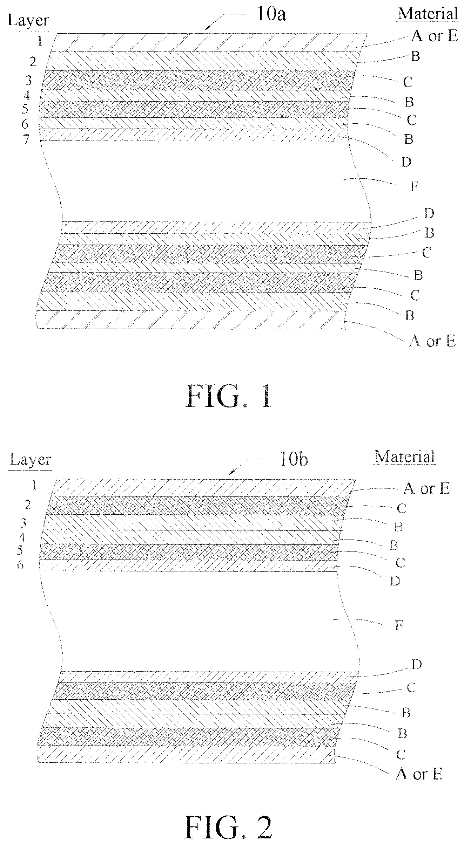

Each innovative flexible composite fire rated blanket consists of five different materials with different thermal conductivity, material thicknesses, heat reflection and radiation, and such five different materials constitute seven layers of laminated fire rated fabrics sewed together by stitching so as to form the flexible composite fire rated blanket. The arrangement of the fire rated fabrics is shown in FIG. 1. Technical parameters in technical specifications of the fire rated fabrics are listed below respectively.

In different arrangements of five selected fire rated fabrics, the design of the innovative flexible composite blanket is established by a series of computer simulation of heat transfer and insulation. Arrangements of different fabrics are optimized through finite element analysis, and the optimal arrangement (as shown in FIG. 1) is verified through full-scale standard fire tests.

According to the present patent application, a composite fire rated shutter basically includes a material A, a material B, a material C, a material D and a material E, and an air interlayer F disposed in the middle. In different implementations, arrangement and the number of the layers (the same layer is provided with multiple ones) may vary.

The material A is a stainless steel wire reinforced fiberglass fabric coated with a specially formulated fire retardant aluminium pigmented polyurethane coating. The material A has high temperature resistance and high reflectivity. The material A provides a heat reflecting surface as well as other properties for the manufacture of smoke, fire shutters and blinds, cavity wall fire barriers and other types of smoke and fire control systems. The material is halogen free and has an improved resistance to hydrolysis and offers a rigid handle.

The material A includes: a substrate (base fabric) and a coating.

Parameters of the base fabric are described as follows:
Yarn Warp EC9 65-70 × 2 + IV1 s/s wire
   Weft EC9 65-70 × 2 + IV1 s/s wire
Thread Count: Warp 16.0/cm ± 5%
   Weft 15.3/cm ± 5%
Tensile strength (typical values): Warp 930 N/cm ± 5%
   Weft 900 N/cm ± 5%
Weight: 640 g/m² ± 5%
Weave 8-hafted satin

Parameters of the coating are described as follows:
Fire retardant polyurethane coating with added aluminium pigment on both sides of the base fabric;
Weight: 650-750 g/m² ± 10%
Thickness: 0.4-0.8 mm ± 10%
Tensile strength of the Warp (typical value): 450-600 N/cm
Tensile strength of the Weft (typical value): 400-550 N/cm
Thermal conductivity (typical value): 0.0956 W/m K ± 5%
Thermal resistance (typical value): 0.0079 m² K/W ± 5%
Range of temperature resistance: -40 to 180 °C

Tolerates 150-200 °C for short periods, however the stainless steel wire reinforced fiberglass fabric is capable of maintaining its integrity up to I 100°C.

The material B is a ceramic blanket, and parameters of the ceramic blanket are as follows: the thickness is 3 mm, the density is 200 kg/m³, the thermal conductivity (W/m K) is: 0.055-0.065 at 200°C; 0.110-0.120 at 400°C; and 0.160-0.170 at 600°C.

The material C is a stainless steel wire reinforced fiberglass fabric with a specially formulated intumescent fire retardant silicone elastomer. This is designed specifically for applications including removable insulation covers, smoke and fire shutters, blinds, cavity wall fire barriers and other types of smoke and fire control systems. The stainless steel wire reinforced fiberglass fabric does not produce toxic gas emissions, has a good resistance to hydrolysis whilst still having a flexible handle. When the stainless steel wire reinforced fiberglass fabric is exposed to a temperature over 140°C, the coating system will form an expanding intumescent char that provides a thermally insulating barrier.

The material C includes: a substrate (base fabric) and a coating.

Parameters of the base fabric are as follows:
Yarn Warp EC9 65-70 × 2 + IV1 s/s wire
   Weft EC9 65-70 × 2 + IV1 s/s wire
Thread Count: Warp 16.0/cm ± 5%
   Weft 15.3/cm ± 5%
Tensile strength (typical values): Warp 930 N/cm ± 5%
   Weft 900 N/cm ± 5%
Weight: 640 g/m² ± 5%
Weave 8-shafted satin

Parameters of the coating are as follows:
Coating coated with a silicone and intumescent graphite on both sides of the base fabric;
Area Mass: 1650 g/m² ± 10%
Thickness (nominal): 1.0-2.5 mm
Tensile strength of the Warp: 500-800 N/cm
Tensile strength of the Weft: 500-800 N/cm
Temperature stability: -40 to 180 °C

Above 120-200°C the intumescent graphite will start to exfoliate, however the stainless steel wire reinforced fiberglass fabric maintains some physical integrity up to 1100 °C.

The material D is a foil-laminated fiberglass fabric layer. Such a fabric is designed as fire rated cloth or shutters with radiation prevention feature.
Product name: silver fire rated fabric (FGAL0150)
Width: 950-1030 mm
Thickness: 0.1-0.25 mm
Weight: 160-195 g/m²
Density: Warp: 15-18 stick/cm
   Weft: 10-14 stick/cm
Tensile strength: Warp≥1500-2000 N/cm
   Weft≥1000-1500 N/cm
Temperature resistance: ≥130-250 °C The material E includes: a substrate (base fabric) and a coating.

Parameters of the base fabric are described as follows:
Roughness of the warp: 0.46 mm
Roughness of the Weft: 0.46 mm
Steel weight: 90-100 g/m²
Thread Count: Warp 9.2/cm ± 5%
   Weft 5.6/cm ± 5%
Tensile strength (typical values): Warp 135 N/cm ± 5%
   Weft 135 N/cm ± 5%
Weight: 900 g/m² ± 5%
Weave method: plain weave

Parameters of the coating are described as follows:
Coating coated with silicone on both sides of the base fabric; further, fire retardant silicone with added optional colour pigment on both sides of the base fabric;
Weight: 140-160 g/m² ± 10%
Thickness: 0.95 mm ± 10%
Tensile strength (typical value): Warp 135 N/cm ± 5%
   Weft 135 N/cm ± 5%
Thermal conductivity (typical value): 0.035 W/m K ± 5%
Thermal resistance (typical value): 0.028 m² K/W ± 5%
Range of temperature resistance: -70 to 700 °C

### Embodiment 1:

A composite fire rated shutter 10a as shown in FIG. 1 includes two sides in symmetry, wherein one side sequentially includes a layer of material A or material E, a layer of material B, a layer of material C, a layer of material B, a layer of material C, a layer of material B and a layer of material D at layers 1 to 7 from outside to inside, and in the middle of the two sides is an air interlayer F. The thickness of the material A is 0.54 mm; the thickness of the material B is 3 mm; the thickness of the material C is 1.5 mm; the thickness of the material D is 0.3 mm; and the thickness of the material E is 0.95 mm.

### Embodiment 2:

A composite fire rated shutter 10b as shown in FIG. 2 includes two sides in symmetry, wherein one side sequentially includes a layer of material A or material E, a layer of material C, two adjacent layers of material B, a layer of material C and a layer of material D at layers 1 to 6 from outside to inside, and in the middle of the two sides is an air interlayer F. The thickness of the material A is 0.54 mm; the thickness of the material B is 3 mm; the thickness of the material C is 1.5 mm; the thickness of the material D is 0.3 mm; and the thickness of the material E is 0.95 mm.

### Embodiment 3:

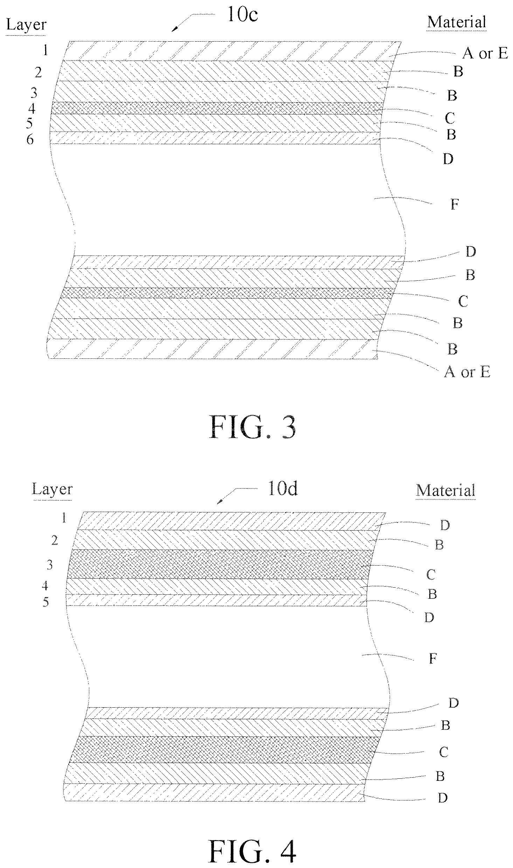

A composite fire rated shutter 10c as shown in FIG. 3 includes two sides in symmetry, wherein one side sequentially includes a layer of material A or material E, two adjacent layers of material B, a layer of material C, a layer of material B and a layer of material D at layers 1 to 6 from outside to inside, and in the middle of the two sides is an air interlayer F. The thickness of the material A is 0.54 mm; the thickness of the material B is 3 mm; the thickness of the material C is 1.5 mm; the thickness of the material D is 0.3 mm; and the thickness of the material E is 0.95 mm.

### Embodiment 4:

A composite fire rated shutter 10d as shown in FIG. 4 includes two sides in symmetry, wherein one side sequentially includes a layer of material D, a layer of material B, a layer of material C, a layer of material B and a layer of material D at layers 1 to 5 from outside to inside, and in the middle of the two sides is an air interlayer F. The thickness of the material B is 3 mm; the thickness of the material C is 1.5 mm; and the thickness of the material D is 0.3 mm.

### Embodiment 5:

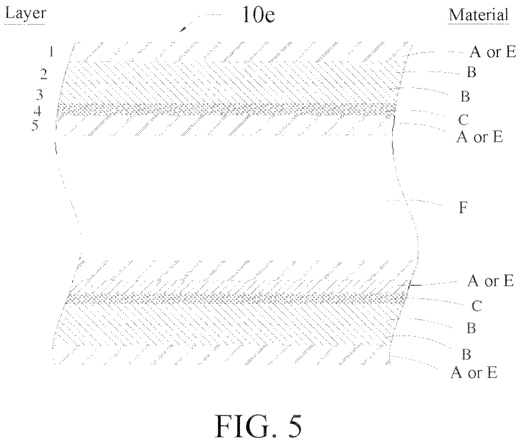

A composite fire rated shutter 10e as shown in FIG. 5 includes two sides in symmetry, wherein one side sequentially includes a layer of material A or material E, two adjacent layers of material B, a layer of material C and a layer of material A or material E at layers 1 to 5 from outside to inside, and in the middle of the two sides is an air interlayer F. The thickness of the material A is 0.54 mm; the thickness of the material B is 3 mm; the thickness of the material C is 1.5 mm; and the thickness of the material E is 0.95 mm.

The present patent application can effectively solve problems such as the ceramic fiber blanket is easy to crack, break and fall off to have a swelling in processes such as making, transporting, installing, rolling or folding and compressing the shutter face, and due to replacement of ceramic fiber cloth, enhances effects of the heat insulating function, and reduces the cost on the whole.

The above descriptions are merely preferred embodiments of the present patent application, and are not used to limit the present patent application. Any amendment, equivalent replacement and improvement and the like made within the spirit and principle of the present patent application should fall within the protection scope of the present patent application.

## Claims

1. A composite fire rated shutter, comprising two sides in symmetry, wherein one of the two sides sequentially comprises a layer of material A or material E, a first layer of material B, a first layer of material C, a second layer of material B, a second layer of material C, a third layer of material B and a layer of material D from outside to inside, and in the middle of the two sides is an air interlayer; wherein the material A or the material E is a stainless steel wire reinforced fiberglass fabric; the material B is a ceramic blanket; the material C is a stainless steel wire reinforced fiberglass fabric; the material D is a foil-laminated fiberglass fabric layer; a thickness of the material A is 0.54 mm; a thickness of the material B is 3 mm; a thickness of the material C is 1.5 mm; a thickness of the material D is 0.3 mm; a thickness of the material E is 0.95 mm; the material A comprises a substrate and a coating coated on the substrate, the coating of the material A comprises fire retardant polyurethane with added aluminium pigment; the material E comprises a substrate and a coating coated on the substrate, and the coating of the material E comprises fire retardant silicone with added optional colour pigment.

2. A composite fire rated shutter, comprising two sides in symmetry, wherein one of the two sides comprises at least one layer of material A, material E or material D, at least one layer of material B, at least one layer of material C and in the middle of the two sides is an air interlayer; wherein the material B is a ceramic blanket; the material C is a stainless steel wire reinforced fiberglass fabric; the material D is a foil-laminated fiberglass fabric layer and the material A or the material E is a stainless steel wire reinforced fiberglass fabric.

3. The composite fire rated shutter according to claim 2, wherein a thickness of the material B is 3 mm; a thickness of the material C is 1.5 mm; a thickness of the material D is 0.3 mm; a thickness of the material A is 0.54 mm; and a thickness of the material E is 0.95 mm.

4. The composite fire rated shutter according to claim 2, wherein the layer of the material A, the material E or the material D is disposed at an outermost side of the composite fire rated shutter.

5. The composite fire rated shutter according to claim 2, wherein at least one of the material A and the material E comprises a substrate and a coating coated on the substrate.

6. The composite fire rated shutter according to claim 5, wherein the coating of the material A comprises fire retardant polyurethane with added aluminium pigment.

7. The composite fire rated shutter according to claim 5, wherein the coating of the material E comprises fire retardant silicone with added optional colour pigment.

8. The composite fire rated shutter according to claim 2, wherein the material C comprises a substrate and a coating coated on the substrate, and the coating of the material C comprises silicon and expanded graphite.

9. The composite fire rated shutter according to claim 2, wherein density of the material B is 200 kg/m³.

10. The composite fire rated shutter according to claim 2, wherein thermal conductivity of the material B is 0.055-0.065 W/m K at 200°C; 0.110-0.120 W/m K at 400°C; and 0.160-0.170 W/m K at 600°C.

11. The composite fire rated shutter according to claim 2, wherein the at least one layer of the material B comprises a first layer of the material B, a second layer of the material B and a third layer of the material B; the at least one layer of the material C comprises a first layer of the material C and a second layer of the material C; and the one of the two sides sequentially comprises the layer of the material A or the material E, the first layer of the material B, the first layer of the material C, the second layer of the material B, the second layer of the material C, the third layer of the material B and the layer of the material D from outside to inside.

12. The composite fire rated shutter according to claim 2, wherein the at least one layer of the material B comprises a first layer of the material B and a second layer of the material B; the at least one layer of the material C comprises a first layer of the material C and a second layer of the material C; and the one of the two sides sequentially comprises the layer of the material A or the material E, the first layer of the material C, the first layer of the material B, the second layer of the material B, the second layer of the material C and the layer of material D from outside to inside.

13. The composite fire rated shutter according to claim 2, wherein the at least one layer of the material B comprises a first layer of the material B, a second layer of the material B and a third layer of the material B; and the one of the two sides sequentially comprises the layer of the material A or the material E, the first layer of the material B, the second layer of the material B, the layer of the material C, the third layer of the material B and the layer of the material D from outside to inside.

14. The composite fire rated shutter according to claim 2, wherein the at least one layer of the material B comprises a first layer of the material B and a second layer of the material B; the at least one layer of the material D comprises a first layer of the material D and a second layer of the material D; and the one of the two sides sequentially comprises the first layer of the material D, the first layer of the material B, the layer of the material C, the second layer of the material B and the second layer of the material D from outside to inside.

15. The composite fire rated shutter according to claim 2, wherein the at least one layer of the material B comprises a first layer of the material B and a second layer of the material B; the at least one layer of the material A or the material E comprises a first layer of the material A or the material E and a second layer of the material A or the material E; and the one of the two sides sequentially comprises the first layer of the material A or the material E, the first layer of the material B, the second layer of the material B, the layer of the material C and the second layer of the material A or the material E from outside to inside.

## Patentansprüche

1. Zusammengesetztes feuersicheres Trennelement, das zwei symmetrische Seiten aufweist, wobei einer der beiden Seiten nacheinander eine Schicht aus Material A oder Material E, eine erste Schicht aus Material B, eine erste Schicht aus Material C, eine zweite Schicht aus Material B, eine zweite Schicht aus Material C, eine dritte Schicht aus Material B und eine Schicht aus Material D von außen nach innen aufweist und in der Mitte der beiden Seiten eine Luftzwischenschicht ist; wobei das Material A oder das Material E ein mit Edelstahldraht-verstärktes Glasfasergewebe ist; das Material B eine Keramikmatte ist; das Material C ein mit Edelstahldraht verstärktes Glasfasergewebe ist; das Material D eine folienlaminierte Glasfasergewebeschicht ist; wobei eine Dicke des Materials A 0,54 mm beträgt; eine Dicke des Materials B 3 mm beträgt; eine Dicke des Materials C1,5 mm beträgt; eine Dicke des Materials D 0,3 mm beträgt; eine Dicke des Materials E 0,95 mm beträgt; wobei das Material A ein Substrat und eine Beschichtung umfasst, die auf das Substrat aufgetragen ist, wobei die Beschichtung des Materials A feuerhemmendes Polyurethan mit Zusatz von Aluminiumpigment umfasst; wobei das Material E ein Substrat und eine Beschichtung umfasst, die auf das Substrat aufgetragen ist, und die Beschichtung des Materials E feuerhemmendes Silikon mit Zusatz eines optionalen Farbpigments umfasst.

2. Zusammengesetztes feuersicheres Trennelement, das zwei symmetrische Seiten aufweist, wobei eine der beiden Seiten mindestens eine Schicht aus einem Material A, Material E oder Material D, mindestens eine Schicht aus Material B, mindestens eine Schicht aus Material C aufweist und in die Mitte der beiden Seiten eine Luftzwischenschicht ist; wobei das Material B eine Keramikmatte ist; das Material C ein mit Edelstahldraht verstärktes Glasfasergewebe ist; das Material D eine folienlaminierte Glasfasergewebeschicht ist und das Material A oder das Material E ein mit Edelstahldraht verstärktes Glasfasergewebe ist.

3. Zusammengesetztes feuersicheres Trennelement nach Anspruch 2, wobei eine Dicke des Materials B 3 mm beträgt; eine Dicke des Materials C 1,5 mm beträgt; eine Dicke des Materials D 0,3 mm beträgt; eine Dicke des Materials A 0,54 mm beträgt; und eine Dicke des Materials E 0,95 mm beträgt.

4. Zusammengesetztes feuersicheres Trennelement nach Anspruch 2, wobei die Schicht des Materials A, des Materials E oder des Materials D an einer äußersten Seite des zusammengesetzten feuersicheren Trennelements angeordnet ist.

5. Zusammengesetztes feuersicheres Trennelement nach Anspruch 2, wobei mindestens eines von dem Material A und dem Material E ein Substrat und eine Beschichtung aufweist, die auf dem Substrat aufgetragen ist.

6. Zusammengesetztes feuersicheres Trennelement nach Anspruch 5, wobei die Beschichtung von dem Material A feuerhemmendes Polyurethan mit Zusatz von Aluminiumpigment umfasst.

7. Zusammengesetztes feuersicheres Trennelement nach Anspruch 5, wobei die Beschichtung von dem Material E feuerhemmendes Polyurethan mit Zusatz von optionalem Farbpigment umfasst.

8. Zusammengesetztes feuersicheres Trennelement nach Anspruch 2, wobei das Material C ein Substrat und eine Beschichtung aufweist, die auf das Substrat aufgetragen ist und die Beschichtung des Materials C Silizium und expandiertes Graphit umfasst.

9. Zusammengesetztes feuersicheres Trennelement nach Anspruch 2, wobei die Dichte des Materials B 200 kg/m³ beträgt.

10. Zusammengesetztes feuersicheres Trennelement nach Anspruch 2, wobei die Wärmeleitfähigkeit des Materials B 0,055 bis 0,065 W/m K bei 200 °C, 0,110 bis 0,120 W/m K bei 400 °C; und von 0, 160 bis 0,170 W/m K bei 600 °C beträgt.

11. Zusammengesetztes feuersicheres Trennelement nach Anspruch 2, wobei die mindestens eine Schicht des Materials B eine erste Schicht des Materials B, eine zweite Schicht des Materials B und eine dritte Schicht des Materials B umfasst; wobei die mindestens eine Schicht des Materials C eine erste Schicht des Materials C und eine zweite Schicht des Materials C umfasst; und die eine der beiden Seiten aufeinanderfolgend die Schicht aus dem Material A oder dem Material E, die erste Schicht des Materials B, die erste Schicht des Materials C, die zweite Schicht des Materials B, die zweite Schicht des Materials C, die dritte Schicht des Materials B und die Schicht des Materials D von der Außenseite zu der Innenseite hin aufweist.

12. Zusammengesetztes feuersicheres Trennelement nach Anspruch 2, wobei die mindestens eine Schicht des Materials B eine erste Schicht des Materials B und eine zweite Schicht des Materials B umfasst; wobei die mindestens eine Schicht des Materials C eine erste Schicht des Materials C und eine zweite Schicht des Materials C umfasst; und die eine der beiden Seiten aufeinanderfolgend die Schicht aus dem Material A oder dem Material E, die erste Schicht des Materials C, die erste Schicht des Materials B, die zweite Schicht des Materials B, die zweite Schicht des Materials C und die Schicht des Materials D von der Außenseite zu der Innenseite hin aufweist.

13. Zusammengesetztes feuersicheres Trennelement nach Anspruch 2, wobei die mindestens eine Schicht des Materials B eine erste Schicht des Materials B, eine zweite Schicht des Materials B und eine dritte Schicht des Materials B umfasst; und die eine der beiden Seiten aufeinanderfolgend die Schicht aus dem Material A oder dem Material E, die erste Schicht des Materials B, die zweite Schicht des Materials B, die Schicht des Materials C, die dritte Schicht des Materials B und die Schicht des Materials D von der Außenseite zu der Innenseite hin aufweist.

14. Zusammengesetztes feuersicheres Trennelement nach Anspruch 2, wobei die mindestens eine Schicht des Materials B eine erste Schicht des Materials B und eine zweite Schicht des Materials B umfasst; wobei die mindestens eine Schicht des Materials D eine erste Schicht des Materials D und eine zweite Schicht des Materials D umfasst; und die eine der beiden Seiten aufeinanderfolgend die erste Schicht des Materials D, die erste Schicht des Materials B, die Schicht des Materials C, die zweite Schicht des Materials B und die zweite Schicht des Materials D von der Außenseite zu der Innenseite hin aufweist.

15. Zusammengesetztes feuersicheres Trennelement nach Anspruch 2, wobei die mindestens eine Schicht des Materials B eine erste Schicht des Materials B und eine zweite Schicht des Materials B umfasst; wobei die mindestens eine Schicht des Materials A oder des Materials E eine erste Schicht des Materials A oder des Materials E und eine zweite Schicht des Materials A oder des Materials E umfasst; und die eine der beiden Seiten aufeinanderfolgend die erste Schicht des Materials A oder des Material E, die erste Schicht des Materials B, die zweite Schicht des Materials B, die Schicht des Materials C und die zweite Schicht des Materials A oder des Materials E von der Außenseite zu der Innenseite hin aufweist.

## Revendications

1. Obturateur composite résistant au feu, comprenant deux côtés en symétrie, dans lequel un des deux côtés comprend de manière séquentielle une couche de matériau A ou de matériau E, une première couche de matériau B, une première couche de matériau C, une seconde couche de matériau B, une seconde couche de matériau C, une troisième couche de matériau B et une couche de matériau D de l'extérieur vers l'intérieur, et au milieu de ces deux côtés se trouve une couche intermédiaire d'air ; dans lequel le matériau A ou le matériau E est un tissu en fibre de verre renforcé par un fil d'acier inoxydable ; le matériau B est une couverture en céramique ; le matériau C est un tissu en fibre de verre renforcé par un fil d'acier inoxydable ; le matériau D est une couche de tissu en fibre de verre stratifiée ; une épaisseur du matériau A est de 0,54 mm ; une épaisseur du matériau B est de 3 mm ; une épaisseur du matériau C est de 1,5 mm ; une épaisseur du matériau D est de 0,3 mm ; une épaisseur du matériau E est de 0,95 mm ; le matériau A comprend un substrat et un revêtement enduit sur le substrat, le revêtement du matériau A comprend du polyuréthane ignifuge avec l'ajout d'un pigment d'aluminium ; le matériau E comprend un substrat et un revêtement enduit sur le substrat, et le revêtement du matériau E comprend de la silicone ignifuge avec l'ajout d'un éventuel pigment coloré.

2. Obturateur composite résistant au feu, comprenant deux côtés en symétrie, dans lequel un des deux côtés comprend au moins une couche de matériau A, de matériau E ou de matériau D, au moins une couche de matériau B, au moins une couche de matériau C et au milieu des deux côtés se trouve une couche intermédiaire d'air ; dans lequel le matériau B est une couverture de céramique ; le matériau C est un tissu en fibre de verre renforcé par un fil d'acier inoxydable ; le matériau D est une couche de tissu en fibre de verre stratifié et le matériau A ou le matériau E est un tissu en fibre de verre renforcé par un fil d'acier inoxydable.

3. Obturateur composite résistant au feu selon la revendication 2, dans lequel une épaisseur du matériau B est de 3 mm ; une épaisseur du matériau C est de 1,5 mm ; une épaisseur du matériau D et de 0,3 mm ; une épaisseur du matériau A est de 0,54 mm ; et une épaisseur du matériau E est de 0,95 mm.

4. Obturateur composite résistant au feu selon la revendication 2, dans lequel la couche du matériau A, du matériau E ou du matériau D est déposée sur un côté le plus externe de l'obturateur composite résistant au feu.

5. Obturateur composite résistant au feu selon la revendication 2, dans lequel au moins un du matériau A et du matériau E comprend un substrat et un revêtement enduit sur le substrat.

6. Obturateur composite résistant au feu selon la revendication 5, dans lequel le revêtement du matériau à comprend du polyuréthane ignifuge avec l'ajout d'un pigment d'aluminium.

7. Obturateur composite résistant au feu selon la revendication 5, dans lequel le revêtement du matériau E comprend de la silicone ignifuge avec l'ajout d'un éventuel pigment coloré.

8. Obturateur composite résistant au feu selon la revendication 2, dans lequel le matériau C comprend un substrat et un revêtement enduit sur le substrat, et le revêtement du matériau C comprend de la silicone et du graphite expansé.

9. Obturateur composite résistant au feu selon la revendication 2, dans lequel la densité du matériau B est de 200 kg/m³.

10. Obturateur composite résistant au feu selon la revendication 2, dans lequel la conductivité thermique du matériau B est comprise entre 0,055 et 0,065 W/m K à 200° C ; entre 0,110 et 0,120 W/m K à 400° C ; et entre 0,160 et 0,170 W/m K à 600° C.

11. Obturateur composite résistant au feu selon la revendication 2, dans lequel l'au moins une couche du matériau B comprend une première couche du matériau B, une seconde couche du matériau B et une troisième couche du matériau B ; l'au moins une couche du matériau C comprend une première couche du matériau C et une seconde couche du matériau C ; et l'un des deux côtés comprend de manière séquentielle la couche du matériau A ou du matériau E, la première couche du matériau B, la première couche du matériau C, la seconde couche du matériau B, la seconde couche du matériau C, la troisième couche du matériau B et la couche du matériau D de l'extérieur vers l'intérieur.

12. Obturateur composite résistant au feu selon la revendication 2, dans lequel l'au moins une couche du matériau B comprend une première couche du matériau B et une seconde couche du matériau B ; l'au moins une couche du matériau C comprend une première couche du matériau C et une seconde couche du matériau C ; et l'un des deux côtés comprend de manière séquentielle la couche du matériau A ou du matériau E, la première couche du matériau C, la première couche du matériau B, la seconde couche du matériau B, la seconde couche du matériau C et la couche du matériau D de l'extérieur vers l'intérieur.

13. Obturateur composite résistant au feu selon la revendication 2, dans lequel l'au moins une couche du matériau B comprend une première couche du matériau B, une seconde couche du matériau B et une troisième couche du matériau B ; et l'un des deux côtés comprend de manière séquentielle la couche du matériau A ou du matériau E, la première couche du matériau B, la seconde couche du matériau B, la couche du matériau C, la troisième couche du matériau B et la couche du matériau D de l'extérieur vers l'intérieur.

14. Obturateur composite résistant au feu selon la revendication 2, dans lequel l'au moins une couche du matériau B comprend une première couche du matériau B et une seconde couche du matériau B ; l'au moins une couche du matériau D comprend une première couche du matériau D et une seconde couche du matériau D ; et l'un des deux côtés comprend de manière séquentielle la première couche du matériau D, la première couche du matériau B, la couche du matériau C, la seconde couche du matériau B et la seconde couche du matériau D de l'extérieur vers l'intérieur.

15. Obturateur composite résistant au feu selon la revendication 2, dans lequel l'au moins une couche de matériau B comprend une première couche du matériau B et une seconde couche du matériau B ; l'au moins une couche du matériau A ou du matériau E comprend une première couche du matériau A ou du matériau E et une seconde couche du matériau A ou du matériau E ; et l'un des deux côtés comprend de manière séquentielle la première couche du matériau A ou du matériau E, la première couche du matériau B, la seconde couche du matériau B, la couche du matériau C et la seconde couche du matériau A ou du matériau E de l'extérieur vers l'intérieur.
